# EUROPÄISCHE PATENTSCHRIFT

(11) **EP 4 478 792 B1**
(45) Veröffentlichungstag und Bekanntmachung des Hinweises auf die Patenterteilung: **20.05.2026**
(21) Anmeldenummer: 24171535.8
(22) Anmeldetag: 22.04.2024
(51) Int. Cl.: H04W 52/02, H04W 88/16

(54) **VERFAHREN ZUM ENERGIEMANAGEMENT EINES BATTERIEBETRIEBENEN FUNKKNOTENS**
METHOD FOR ENERGY MANAGEMENT OF A BATTERY-POWERED RADIO NODE
PROCÉDÉ DE GESTION D'ÉNERGIE D'UN NOEUD RADIO ALIMENTÉ PAR BATTERIE

(30) Priorität: 04.05.2023 DE 102023111683
(43) Veröffentlichungstag der Anmeldung: 18.12.2024
(73) Patentinhaber: Diehl Metering Systems GmbH, 90451 Nürnberg (DE)
(72) Erfinder: Joppich-Dohlus, Petra, 91080 Rathsberg (DE); Schmidt, Achim, 91367 Weißenohe (DE); Elberskirch, Dominik, 90482 Nürnberg (DE); Weiss, Karolin, 90459 Nürnberg (DE)
(74) Vertreter: Diehl Patentabteilung

(56) Entgegenhaltungen:
- US-A1- 2020 213 942
- US-A1- 2021 051 591

## Beschreibung

Die vorliegende Erfindung betrifft ein Verfahren zum Energiemanagement eines batteriebetriebenen Funkknotens gemäß dem Oberbegriff des Anspruchs 1 sowie einen Funkknoten gemäß dem Oberbegriff des Anspruchs 16.

### Technologischer Hintergrund

Die Erfindung betrifft ein Verfahren zum Energiemanagement eines batteriebetriebenen Funkknotens in einem Long Range Wide Area Network (LoRaWAN), wie es beispielsweise in der LoRaWAN L2 1.0.4 Spezifikation (TS001-1.0.4) beschrieben ist. Hierbei handelt es sich um ein Funknetzwerk, welches lizenzfreie Frequenzbänder nutzt. In einem derartigen Netzwerk sind eine Vielzahl von Funkknoten vorgesehen, die per Funk jeweils mit mindestens einem Gateway über eine bidirektionale Datenübertragung kommunizieren. Das Gateway leitet die von den Funkknoten empfangenen Daten an einen Netzwerkserver bzw. network server weiter, der die Daten wiederum an einen Anwendungsserver bzw. application server weiterleitet und umgekehrt. Bei der bidirektionalen Datenübertragung werden Nachrichten in einer Uplink-Übertragung von dem Funkknoten an den Netzwerkserver bzw. den Anwendungsserver gesendet und im Downlink von dem Anwendungsserver bzw. dem Netzwerkserver an den Funkknoten gesendet.

Bei einem Funkknoten kann es sich um eine Sensoreinrichtung zur Erfassung von Daten jeglicher Art, um eine Aktoreinrichtung zur Vornahme bestimmter Handlungen oder Maßnahmen oder um eine Kombination einer Sensoreinrichtung und einer Aktoreinrichtung handeln. Derartige Funkknoten werden mit einer eigenen, d.h. autarken, Energieversorgung in Form einer Batterie, vorzugsweise einer Longlife-Batterie, betrieben, die eine begrenzte, vom individuellen Energieverbrauch des Funkknotens abhängige Lebensdauer hat und nicht wieder aufladbar ist. Im Normalfall kann mit einer derartigen Batterie eine Standzeit "im Feld" von mindestens zehn Jahren erreicht werden, bis ein Austausch notwendig wird.

Ein Funkknoten öffnet, gemäß der LoRaWAN-Spezifikation nach jeder Uplink-Übertragung mindestens ein Empfangsfenster, um eine Downlink-Übertragung von dem Netzwerkserver oder der Anwendungsserver zu empfangen. Hierbei wird zunächst ein Empfangsfenster eine festgelegte Zeit nach der Uplink-Übertragung geöffnet, welches dann für eine bestimmte Zeit geöffnet bleibt. Sollten in diesem Empfangsfenster keine Datentelegramme oder Kommandos von dem Gateway empfangen werden, öffnet der Funkknoten ein zweites Empfangsfenster. Das zweite Empfangsfenster wird ebenfalls zu einer festgelegten Zeit nach der Uplink-Übertragung geöffnet und bleibt für eine bestimmte Zeit geöffnet. Zudem kann der Funkknoten beispielsweise weitere Empfangsfenster, unabhängig von einer Uplink-Übertragung öffnen. Alternativ kann der Funkknoten nach einer Uplink-Übertragung ein Empfangsfenster öffnen, welches dauerhaft bis zur nächsten Uplink-Übertragung geöffnet bleibt.

Der Funkknoten benötigt für das Versenden von Uplink-Übertragungen und den Empfang sowie die Verarbeitung von Downlink-Übertragungen Energie, welche von der Batterie zur Verfügung gestellt wird. Der Funkknoten kann den Empfang von Datentelegrammen bzw. Kommandos einer Downlink-Übertragung und deren Verarbeitung nicht beeinflussen bzw. steuern. Aus diesem Grund hat der Funkknoten keinen Einfluss auf den Energieverbrauch bei dem Empfang oder der Verarbeitung einer Downlink-Übertragung. Dies hat zur Folge, dass der Funkknoten unter gewissen Umständen bei dem Empfang von Datentelegramme bzw. Kommandos und deren Verarbeitung zu viel Energie verbraucht, sodass die Batterie vorzeitig aufgebraucht ist und der Funkknoten vorgesehene Standzeit von zehn Jahren nicht erreicht.

Aus der US 2021/0051591 A1 ist ein Verfahren zum Energiemanagement bekannt. Das Verfahren kann für eine bidirektionale Datenübertragung in einem Long Range Wide Area Network (LoRaWAN) vorgesehen sein. Auf Basis gemessener Übertragungswerte, kann der Energiebedarf ermittlet werden. Auf Grundlage dieses Werte kann das Versendet in Bezug auf die Restenergie gesteuert werden.

### Aufgabe der vorliegenden Erfindung

Aufgabe der vorliegenden Erfindung ist es, ein Verfahren zum Betrieb eines batteriebetriebenen Funkknotens in einem Long Range Wide Area Network (LoRaWAN) zur Verfügung zu stellen, mit welchem der Energieverbrauch des Funkknotens gesteuert werden kann.

### Lösung der Aufgabe

Die vorstehende Aufgabe wird durch ein Verfahren mit den Merkmalen des Anspruchs 1 sowie durch einen Funkknoten gemäß Anspruch 16 gelöst. Zweckmäßige Ausgestaltungen des erfindungsgemäßen Verfahrens und des Funkknotens werden in den zugehörigen abhängigen Ansprüchen beansprucht.

Erfindungsgemäß ist ein Verfahren zum Energiemanagement eines batteriebetriebenen Funkknotens für eine bidirektionale Datenübertragung in einem Long Range Wide Area Network (LoRaWAN) zwischen dem Funkknoten und einem Netzwerkserver und/oder einem Anwendungsserver über mindestens ein Gateway vorgesehen, wobei der Funkknoten für eine Uplink-Übertragung in einen Sendemodus und für einen Downlink-Empfang einen Empfangsmodus übergeht, wobei der Funkknoten nach einer Uplink-Übertragung mindestens ein Empfangsfenster öffnet, und wobei auf Basis eines Credit-Punkte-Systems während des Betriebs des Funkknotens ein aktuelles Versenden oder Nichtversenden einer Uplink-Übertragung und ein aktuelles Verarbeiten oder Nicht-Verarbeiten einer, vorzugsweise empfangenen, Downlink-Übertragung abhängig von einem Credit-Punkte-Stand des Credit-Punkte-Systems des Funkknotens gesteuert wird.

Der Credit-Punkte-Stand stellt eine Anzahl von Credit-Punkten dar und spiegelt die dem Funkknoten für eine bidirektionale Datenübertragung momentan zur Verfügung stehende Energie wider. Hierbei entspricht ein Credit-Punkt bzw. der Credit-Punkte-Stand z. B. einer bestimmten Menge an Leistung, Energie, Stromstärke oder Spannung. Auf Basis der verfügbaren Energie kann Einfluss auf die Uplink-Übertragung bzw. die Verarbeitung der, vorzugsweise empfangenen, Downlink-Übertragung genommen werden. Durch die Steuerung der Uplink-Übertragung bzw. Verarbeitung der Downlink-Übertragung des Funkknotens kann der Strom- bzw. Energieverbrauch des Funkknotens effektiv begrenzt werden. So kann z. B. bei einem niedrigen Credit-Punkte-Stand Einfluss auf die Uplink-Übertragung bzw.

Verarbeitung der Downlink-Übertragung genommen werden. Durch diese Maßnahmen kann der Energieverbrauch des Funkknotens effektiv reduziert werden. Infolgedessen kann eine ausreichende Standzeit des Funkknotens gewährleistet werden. Zweckmäßigerweise werden die Empfangsfenster in Abhängigkeit einer ausgesendeten Uplink-Übertragung geöffnet.

Zweckmäßigerweise kann, insbesondere während des Betriebs des Funkknotens mit dem Credit-Punkte-System, der Credit-Punkte-Stand des Funkknotens pro verstrichener Zeiteinheit, vorzugsweise fortlaufend, um eine vorbestimmte Zahl von Credit-Punkten erhöht werden, z. B. durch Zurechnung oder Addition. Beispielsweise handelt es sich bei der Zeiteinheit um Sekunden, Minuten, Stunden oder Tage. Hierdurch wird die dem Funkknoten für eine bidirektionale Datenübertragung aktuell zur Verfügung stehende Energie pro Zeiteinheit erhöht.

Zweckmäßigerweise wird der, vorzugsweise aktuelle, Credit-Punkte-Stand des Funkknotens wegen Durchführung einer vom Funkknoten vorgenommenen Uplink-Übertragung und/oder der Verarbeitung einer Downlink-Übertragung, vorzugsweise die Verarbeitung einer empfangenen Downlink-Übertragung, insbesondere um eine vorbestimmte Zahl von Credit-Punkten, reduziert, z. B. durch Abziehen oder Subtraktion. Hierdurch wird die dem Funkknoten für eine bidirektionale Datenübertragung aktuell zur Verfügung stehende Energie in Abhängigkeit der durchgeführten Sendetätigkeit und/oder Verarbeitungstätigkeit reduziert. Zweckmäßigerweise wird der Credit-Punkte-Stand vor der Uplink-Übertragung, z. B. um die für die bidirektionale Datenübertragung, insbesondere die für die Verarbeitung einer Downlink-Übertragung und die Uplink-Übertragung, vorbestimmte Zahl von Credit-Punkten, reduziert.

Insbesondere ist hierdurch der Credit-Punkte-Stand variabel und von der Funkaktivität des Funkknotens abhängig. Bei einer hohen Funkaktivität, also einer Vielzahl Uplink-Übertragungen und/oder Verarbeitungen von Downlink-Übertragungen, sinkt der Credit-Punkte-Stand, während er bei einer geringen oder keiner Funkaktivität des Funkknotens gleichbleibt oder ansteigt. Insbesondere ist die vorbestimmte Zahl von Credit-Punkten, um die der Credit-Punkte-Stand erhöht wird, und/oder die vorbestimmte Zahl von Credit-Punkten, um die der Credit-Punkte-Stand reduziert wird, eine ganze Zahl.

Zweckmäßigerweise handelt es sich bei der Uplink-Übertragung des Funkknotens um ein Versenden eines Datentelegramms oder eines Requests oder eines Teils eines Datentelegramms oder eines Teils eines Requests oder einer Warn-Nachricht oder einer Response oder eines Teils einer Response. Bei einem Request kann es sich z. B. um eine Anfrage des Funkknotens an den Netzwerkserver für eine Zeitsynchronisation handeln. Bei einer Response handelt es sich insbesondere um eine Antwort des Funkknotens auf eine Downlink-Übertragung. Zweckmäßigerweise wird die Warn-Nachricht bei Erreichen eines bestimmten Credit-Punkte-Stands ausgesendet.

Insbesondere handelt es sich bei der Verarbeitung um eine Ausführung bzw. Datenverarbeitung eines Datentelegramms oder eines Kommandos oder eines Teils eines Datentelegramms oder eines Teils eines Kommandos einer empfangenen Downlink-Übertragung durch den Funkknoten.

Vorteilhafterweise ist in dem Credit-Punkte-System eine vorbestimmte Zahl von Credit-Punkten einer bestimmten Art von Datentelegramm oder Kommando oder einem bestimmten Teil eines Datentelegramms oder Teil eines Kommandos zugeordnet. Hierdurch kann jeder Art von bidirektionalen Datenübertragung, also jeder Art von Uplink-Übertragung und jeder Art von Downlink-Übertragung, eine Zahl von Credit-Punkten zugeordnet werden, die insbesondere dem Energiebedarf der Übertragung und z. B. der Datenverarbeitung der Downlink-Übertragung entspricht. Bei den Datentelegrammen oder Kommandos oder jeweils eines Teils davon kann es sich z. B. um Firmware-Aktualisierungen, Frequenzabstimmungen und/oder Zeitabstimmungen zwischen dem Funkknoten und dem Netzwerkserver und/oder dem Anwendungsserver handeln.

Alternativ kann in dem Credit-Punkte-System eine vorbestimmte Zahl von Credit-Punkten in Abhängigkeit der Größe, z. B. in Bits, der Uplink-Übertragung und/oder der Downlink-Übertragung zugeordnet sein. Aufgrund der Größe der Uplink- bzw. Downlink-Übertragung kennt der Funkknoten die Zeit, die er benötigt um die Uplink-Übertragung auszusenden bzw. die Downlink-Übertragung zu empfangen. Basierend auf der Zeit und der für das Aussenden bzw. das Empfangen benötigten Energie pro Zeiteinheit ermittelt der Funkknoten den Gesamtenergiebedarf für die Uplink-Übertragung und/oder den Empfang der Downlink-Übertragung und somit auch die dafür benötigte Zahl von Credit-Punkten. Hierdurch kann der Credit-Punkte Bedarf sehr genau bestimmt werden.

Zweckmäßigerweise wird das Credit-Punkte-System von einer Steuerungseinheit des Funkknotens gesteuert. Hierdurch kann das Verfahren, insbesondere selbsttätig, vom Funkknoten gesteuert werden. Das Verfahren kann somit unabhängig von dem Gateway und/oder dem Netzwerkserver und/oder dem Anwendungsserver gesteuert werden.

Zweckmäßigerweise wird der Credit-Punkte-Stand des Funkknotens an den Netzwerkserver und/oder den Anwendungsserver übermittelt. Diese Übertragung kann im Rahmen einer routinemäßigen Übertragung oder bei Erreichen eines Bestimmten Credit-Punkte-Stands, z. B. als Warn-Nachricht, durchgeführt werden. Hierdurch sind der Netzwerkserver und/oder der Anwendungsserver über den aktuellen Credit-Punkte-Stand des Funkknotens informiert. Hierfür übermittelt der Funkknoten seinen aktuellen Credit-Punkte-Stand vorzugsweise mit jeder Uplink-Übertragung oder in bestimmten Intervallen.

Dadurch, dass der Credit-Punkte-Stand und/oder die Warn-Nachricht in einer Uplink-Übertragung, insbesondere in einem Payload- oder Nutzdaten-enthaltenden Uplink-Übertragung an den Netzwerkserver und/oder den Anwendungsserver übermittelt werden kann, kann die Mitteilung des Credit-Punkte-Stands an den Netzwerkserver und/oder den Anwendungsserver zusammen mit einer normalerweise bzw. standardmäßig stattfindenden Uplink-Übertragung, z. B. einer Zählerstands-Mitteilung, übertragen werden. Eine separate bzw. besondere Uplink-Übertragung für den Credit-Punkte-Stand kann somit entfallen. Alternativ kann der Credit-Punkte-Stand und/oder die Warn-Nachricht in einer eigenständigen Uplink-Übertragung übermittelt werden.

Zweckmäßigerweise können in Abhängigkeit des Credit-Punkte-Stands des Funkknotens folgende Maßnahmen zur Reduktion des Energieverbrauchs getroffen werden:
- der Netzwerkserver und/oder der Anwendungsserver senden keine Downlink-Übertragung an den Funkknoten; und/oder
- der Funkknoten verarbeitet eine empfangene Downlink-Übertragung nicht; und/oder
- der Funkknoten sendet keine Antwort auf eine empfangene Downlink-Übertragung aus; und/oder
- der Funkknoten versendet eine aktuell zu versendende Uplink-Übertragung nicht.

Indem der Netzwerkserver und/oder der Anwendungsserver in Abhängigkeit des Credit-Punkte-Stands keine Downlink-Übertragung an den Funkknoten senden, empfängt der Funkknoten keine Downlink-Übertragung und muss diese auch nicht ausführen bzw. verarbeiten. Hierdurch wird der Energieverbrauch des Funkknotens reduziert.

Dadurch, dass der Funkknoten in Abhängigkeit des Credit-Punkte-Stands eine aktuell empfangene Downlink-Übertragung nicht ausführt bzw. nicht verarbeitet, benötigt der Funkknoten zwar Energie um die Downlink-Übertragung zu empfangen, allerdings wird keine Energie für die Ausführung bzw. Verarbeitung der Downlink-Übertragung benötigt. Hierdurch kann der Funkknoten Energie einsparen, auch wenn von dem Netzwerkserver und/oder dem Anwendungsserver ausgesendete Datentelegramme oder Kommandos einer Downlink-Übertragung vom Funkknoten empfangen werden.

Indem der Funkknoten in Abhängigkeit des Credit-Punkte-Stands keine Antwort auf eine aktuell empfangene Downlink-Übertragung aussendet, kann Energie auf Seiten des Funkknotens eingespart werden.

Dadurch, dass der Funkknoten in Abhängigkeit des Credit-Punkte-Stands eine aktuelle Uplink-Übertragung nicht versendet, wird Energie eingespart. Insbesondere öffnet der Funkknoten hierdurch keine von der Uplink-Übertragung abhängigen Empfangsfenster. Zudem senden der Netzwerkserver und/oder der Anwendungsserver keine Downlink-Übertragung als Antwort auf die Uplink-Übertragung aus. Hierdurch wird besonders viel Energie auf Seiten des Funkknotens eingespart.

Vorzugsweise wird mindestens eine der Maßnahmen zur Reduktion des Energieverbrauchs bei Erreichen bzw. Unterschreiten eines ersten Grenzwerts getroffen. Insbesondere ist dem ersten Grenzwert ein bestimmter Credit-Punkte-Stand zugeordnet. So können z. B. bei einer Unterschreitung des ersten Grenzwerts bestimmte Energiesparmaßahmen ausgeführt werden, wodurch der Energieverbrauch des Funkknotens reduziert werden kann. Zweckmäßigerweise werden bei Erreichen bzw. Unterschreiten des ersten Grenzwerts z. B. folgende Maßnahmen getroffen:
- der Netzwerkserver und/oder der Anwendungsserver senden keine Downlink-Übertragung an den Funkknoten; und/oder
- der Funkknoten verarbeitet eine empfangene Downlink-Übertragung nicht; und/oder
- der Funkknoten sendet keine Antwort auf eine empfangene Downlink-Übertragung aus.

Insbesondere kann der Funkknoten bei Erreichen bzw. Unterschreitung des ersten Grenzwerts eine Mitteilung, z. B. einen Alarm oder eine Warn-Nachricht, an den Netzwerkserver und/oder dem Anwendungsserver übermitteln, um diese bzw. dieses auf ein Unterschreiten des ersten Grenzwerts hinzuweisen. Die Mitteilung kann hierbei z. B. als Uplink-Übertragung ausgeführt werden oder als direkte Antwort auf eine Downlink-Übertragung.

Vorteilhafterweise wird mindestens eine der Maßnahmen zur Reduktion des Energieverbrauchs bei Erreichen bzw. Unterschreiten eines zweiten Grenzwerts getroffen, wobei dem zweiten Grenzwert im Vergleich zum ersten Grenzwert ein geringerer Credit-Punkte-Stand zugeordnet ist. Bei einer Unterschreitung des zweiten Grenzwerts kann der Funkknoten eine zusätzliche Energiesparmaßnahme durchführen, z B. indem der Funkknoten eine aktuell zu versendende Uplink-Übertragung nicht versendet.

Zweckmäßigerweise wird das mindestens eine Empfangsfenster in einem bestimmten Zeitabstand nach dem Ende der Uplink-Übertragung geöffnet, wodurch dem Netzwerkserver und/oder dem Anwendungsserver ausreichend Zeit einer Downlink-Übertragung, z. B. als Antwort auf die Uplink-Übertragung, zur Verfügung gestellt wird. Beispielsweise beträgt der Zeitabstand für ein erstes Empfangsfenster zwischen 1 s und 15 s ab dem Ende der Uplink-Übertragung.

Insbesondere sind ein erstes und ein zweites Empfangsfenster vorgesehen, wobei das zweite Empfangsfenster geöffnet wird, wenn in dem ersten Empfangsfenster keine Downlink-Übertragung empfangen wird. Dies schafft ein zusätzliches Energieeinsparpotential, da das zweite Empfangsfenster lediglich dann geöffnet wird, wenn im ersten Empfangsfenster keine Downlink-Übertragung empfangen wird. Sollte im ersten Empfangsfenster eine Downlink-Übertragung empfangen werden, wird das zweite Empfangsfenster entsprechend nicht geöffnet. Zweckmäßigerweise wird das zweite Empfangsfenster, zwischen 2 s und 16 s nach dem Ende der Uplink-Übertragung geöffnet. Insbesondere sind das erste Empfangsfenster und das zweite Empfangsfenster nicht gleichzeitig, sondern versetzt zueinander geöffnet.

Vorteilhafterweise wird das zweites Empfangsfenster zeitlich beabstandet zu dem ersten Empfangsfenster geöffnet.

Alternativ oder zusätzlich können weitere bzw. dritte Empfangsfenster vorgesehen sein, welche periodisch, also fortlaufend, in vorbestimmten Zeitabständen geöffnet werden. Hierdurch werden zusätzliche, von einer Uplink-Übertragung unabhängige Möglichkeiten einer Downlink-Übertragung geschaffen.

Zweckmäßigerweise geht der Funkknoten für eine Uplink-Übertragung aus einem Sleep-Modus bzw. Ruhemodus in einen Sendemodus und/oder für einen Downlink-Empfang aus einem Sleep-Modus bzw. Ruhemodus in einen Empfangsmodus über. In dem Sleep-Modus bzw. Ruhemodus ist insbesondere lediglich die Funkaktivität des Funkknotens heruntergefahren bzw. abgeschaltet, während andere Aktivitäten, wie z. B. Sensoraktivitäten und/oder Aktoraktivitäten, weiterhin gewährleistet sind.

Vorzugsweise geht der Funkknoten nach der Uplink-Übertragung und/oder nach dem Schließen des ersten Empfangsfensters und/oder des zweiten Empfangsfensters und/oder der dritten Empfangsfenster in den Sleep-Modus bzw. Ruhemodus über. Hierdurch wird in einfacher Weise Energie gespart.

Die vorliegende Erfindung betrifft darüber hinaus einen Funkknoten gemäß dem Oberbegriff des Anspruchs 16. Erfindungsgemäß umfasst der Funkknoten eine Antenne, eine Steuerungseinheit, eine Batterie sowie eine Sensoreinrichtung und/oder eine Aktoreinrichtung, wobei der Funkknoten zur Durchführung des Verfahrens nach einem der Ansprüche 1-15 hergerichtet ist. Zweckmäßigerweise ist der Funkknoten eine Sensoreinrichtung, insbesondere ein Verbrauchszähler zur Messung des Stromverbrauchs oder des Gasverbrauchs oder des Wasserverbrauchs. Alternativ kann es sich bei dem Funkknoten um eine Aktoreinrichtung zur Vornahme bestimmter Handlungen oder Maßnahmen oder um eine Kombination einer Sensoreinrichtung und einer Aktoreinrichtung handeln.

Zweckmäßigerweise ist der Funkknoten nicht dauerhaft in einem Sendemodus und/oder einem Empfangsmodus. Insbesondere kann es sich bei dem Funkknoten um ein bidirektionales LoRaWAN-Endgerät der Klasse A oder der Klasse B, z. B. gemäß der LoRaWAN L2 1.0.4 Spezifikation (TS001-1.0.4), handeln.

Beispielsweise handelt es sich bei dem Gateway um eine Einrichtung, die Uplink- bzw. Downlink-Übertragungen lediglich weiterleitet. Alternativ oder zusätzlich kann das Gateway als Konzentrator oder Router oder Accesspoint bzw. Zugangspunkt oder Basisstation ausgebildet sein.

Auf dem Anwendungsserver können insbesondere Verbrauchsmesswerte der Funkknoten abgespeichert werden. Auf diese Verbrauchsmesswerte kann z. B. ein Versorgungsunternehmen zugreifen und z. B. die Verbrauchsmesswerte auswerten und basierend darauf eine Abrechnung des Verbrauchs vornehmen.

Zweckmäßigerweise kann der Funkknoten in den lizenzfreien ISM-Bändern bzw. SRD-Bändern, vorzugsweise in einem Frequenzband im Bereich von 865,0-868,0 MHz oder 868,0-868,6 MHz oder 869,4-869,65 MHz oder 902-928 MHz, betrieben werden.

### Beschreibung der Erfindung anhand von Ausführungsbeispielen

Zweckmäßige Ausgestaltungen der vorliegenden Erfindung werden anhand von Zeichnungsfiguren nachstehen näher erläutert. Es zeigen:
- Fig. 1: eine stark vereinfachte schematische Darstellung eines Long Range Wide Area Networks (LoRaWAN);
- Fig. 2: eine stark vereinfachte schematische Darstellung eines beispielhaften Funkknotens zur bidirektionalen Datenübertragung mit einem Netzwerkserver und/oder einem Anwendungsserver über ein Gateway;
- Fig. 3: eine stark vereinfachte Darstellung der von dem Funkknoten nach Fig. 2 geöffneten Empfangsfenster gemäß einer ersten Ausgestaltung;
- Fig. 4: eine stark vereinfachte Darstellung der von dem Funkknoten nach Fig. 2 geöffneten Empfangsfenster gemäß einer zweiten Ausgestaltung;
- Fig. 5: ein beispielhafter Verlauf eines Credit-Punkte-Stands des Funkknotens gemäß Fig. 2 über die Zeit;
- Fig. 6a: eine stark vereinfachte Darstellung einer bidirektionalen Datenübertragung zwischen dem Funkknoten, dem Netzwerkserver und dem Anwendungsserver gemäß Fig. 2;
- Fig. 6b: Verfahrensschritte zur bidirektionalen Datenübertragung gemäß Fig. 6a;
- Fig. 7a: eine stark vereinfachte beispielhafte Darstellung des erfindungsgemäßen Verfahrens bei der bidirektionalen Datenübertragung zwischen dem Funkknoten, dem Netzwerkserver und dem Anwendungsserver gemäß Fig. 6a nach einem ersten Ausführungsbeispiel;
- Fig. 7b: Verfahrensschritte der erfindungsgemäßen bidirektionalen Datenübertragung gemäß Fig. 7a;
- Fig. 8a: eine stark vereinfachte beispielhafte Darstellung des erfindungsgemäßen Verfahrens bei der bidirektionalen Datenübertragung zwischen dem Funkknoten, dem Netzwerkserver und dem Anwendungsserver gemäß Fig. 6a nach einem zweiten Ausführungsbeispiel;
- Fig. 8b: Verfahrensschritte der erfindungsgemäßen bidirektionalen Datenübertragung gemäß Fig. 8a;
- Fig. 9a: eine stark vereinfachte beispielhafte Darstellung des erfindungsgemäßen Verfahrens bei der bidirektionalen Datenübertragung zwischen dem Funkknoten, dem Netzwerkserver und dem Anwendungsserver gemäß Fig. 6a nach einem dritten Ausführungsbeispiel; sowie
- Fig. 9b: Verfahrensschritte der erfindungsgemäßen bidirektionalen Datenübertragung gemäß Fig. 9a.

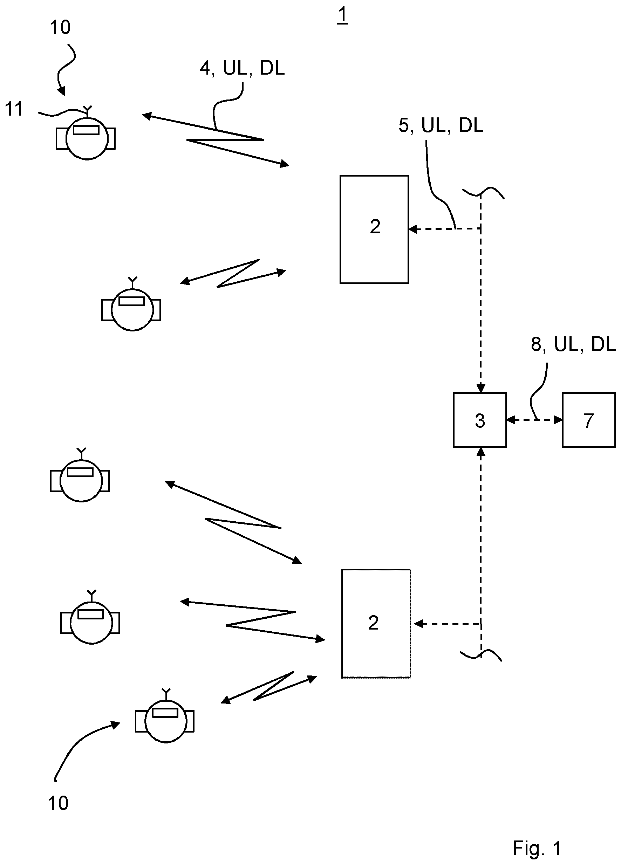

Fig. 1 zeigt eine stark vereinfachte schematische Darstellung eines Long Range Wide Area Networks (LoRaWAN) 1. Das dargestellte LoRaWAN 1 umfasst mehrere Funkknoten 10 mit einer Antenne 11, einen Netzwerkserver 3, einen Anwendungsserver 7 sowie zwei Gateways 2. Die Funkknoten 10 kommunizieren mit den Gateways 2 über eine funkbasierte Datenübertragung 4. Insbesondere kommuniziert ein Funkknoten 10 nur mit einem einzigen Gateway 2. Dies wird in Fig.1 verdeutlicht. Hierbei kommunizieren die beiden oberen Funkknoten 10 mit dem oberen Gateway 2 und die drei unteren Funkknoten 10 mit dem unteren Gateway 2. Die Gateways 2 kommunizieren mit dem Netzwerkserver 3 über eine funkbasierte oder kabelgebundene Datenübertragung 5. Der Netzwerkserver 3 kommuniziert zudem mit dem Anwendungsserver 7 über eine Datenübertragung 8. Alternativ kann bzw. können in dem LoRaWAN 1 nur ein Gateway 2 oder mehr als zwei Gateways 2 vorgesehen sein.

Zwischen einem einzelnen Funkknoten 10 und dem Netzwerkserver 3 und/oder dem Anwendungsserver 7 findet eine bidirektionale Datenübertragung über das mit dem einzelnen Funkknoten 10 kommunizierende Gateway 2 statt. Bei einer bidirektionalen Datenübertragung zwischen den einzelnen Funkknoten 10 und dem Anwendungsserver 7 findet diese zusätzlich über den Netzwerkserver 3 statt. Hierbei wird eine Uplink-Übertragung UL von dem Funkknoten 10 über die funkbasierte Datenübertragung 4 an das Gateway 2 übertragen und von dort aus über die funk- oder kabelbasierte Datenübertragung 5 an den Netzwerkserver 3 übertragen. Dieser Überträgt die Uplink-Übertragung weiter an den Anwendungsserver 4. Eine Downlink-Übertragung DL wird von dem Anwendungsserver 4 oder dem Netzwerkserver 3 über die Datenübertragung 5 an das Gateway 2 übertragen und von dort aus über die Datenübertragung 4 an den Funkknoten 10 übertragen. Alternativ kann die bidirektionale Datenübertragung zwischen dem Funkknoten 10 und dem Netzwerkserver 3 auch über mehrere (in den Figuren nicht dargestellte) Gateways 2 erfolgen.

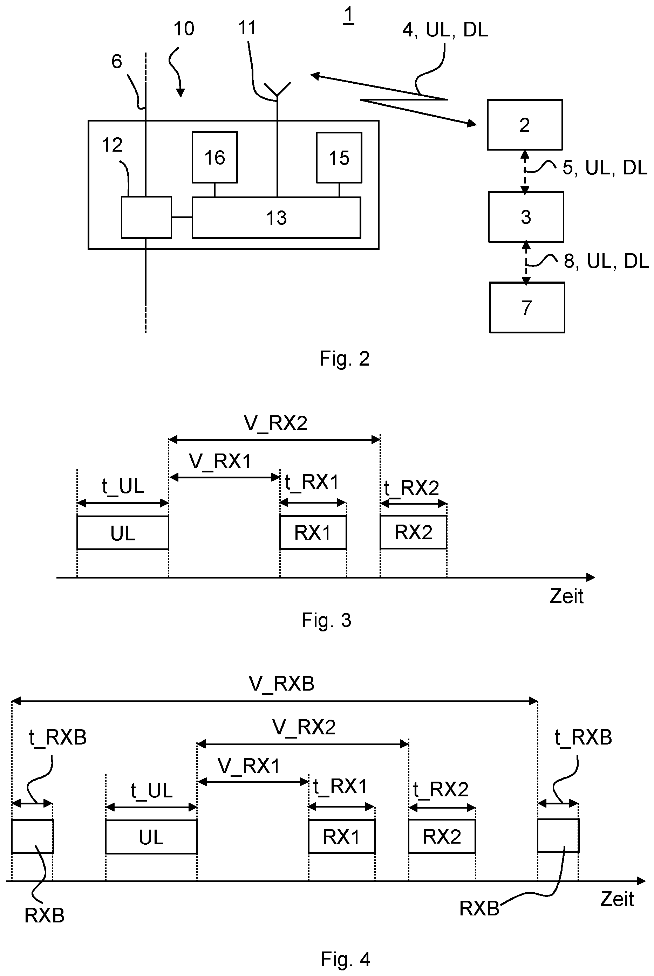

Der Funkknoten 10 wird über eine Batterie 15 mit Energie versorgt, vgl. Fig. 2. Bei der Batterie 15 kann es sich um eine Longlife-Batterie handeln. Im Normalfall kann mit einer derartigen Longlife-Batterie eine Standzeit "im Feld" von mindestens zehn Jahren erreicht werden.

Der Funkknoten 10 umfasst zudem eine Steuerungseinheit 13 sowie einen Speicher 16. Bei dem in Fig. 2 gezeigten Funkknoten 10 handelt es sich um eine Sensoreinrichtung zur Erfassung von Daten jeglicher Art. Hierfür umfasst der Funkknoten 10 einen an einer Versorgungsleitung 6 angebrachten Sensor 12 beispielsweise zum Erfassen eines Stromverbrauchs oder eines Flüssigkeitsdurchflusses oder Gasdurchflusses. Alternativ kann es sich bei dem Funkknoten 10 auch um eine Aktoreinrichtung zur Vornahme bestimmter Handlungen oder Maßnahmen oder um eine Kombination einer Sensoreinrichtung und einer Aktoreinrichtung handeln.

Die von dem Sensor 12 gemessenen Messdaten werden an die Steuerungseinheit 13 übertragen. Beispielsweise verarbeitet die Steuerungseinheit 13 die Messdaten und speichert diese anschließend im Speicher 16 ab. Alternativ können die Messdaten direkt, also ohne eine Verarbeitung durch die Steuerungseinheit 13, im Speicher 16 abgespeichert werden. Die Steuerungseinheit 13 kann auf die im Speicher 16 gespeicherten, und z. B. verarbeiteten, Messdaten zugreifen und diese über die Antenne 11 mittels einer Uplink-Übertragung UL, z. B. als Datentelegramm, an den Anwendungsserver 4 über das Gateway 2 und den Netzwerkserver 3 aussenden.

Vor der Uplink-Übertragung UL befindet sich der Funkknoten 10 z. B. in einem Sleep-Modus bzw. Ruhemodus, in welchem die Funkaktivität des Funkknotens 10 heruntergefahren bzw. abgeschaltet ist. Allerdings bleibt die Erfassung von Verbrauchsdaten durch den Sensor 12 gewährleistet. Für die Uplink-Übertragung UL begibt sich der Funkknoten 10 von dem Sleep-Modus in einen Sendemodus. Wie in Fig. 3 dargestellt, benötigt die Uplink-Übertragung UL eine gewisse Übertragungsdauer t_UL, bis die Uplink-Übertragung UL durchgeführt ist. Nach der Uplink-Übertragung UL begibt sich der Funkknoten 10 vorzugsweise wieder in den Sleep-Modus.

Nach Ablauf eines bestimmten Zeitabstands V_RX1 nach der Uplink-Übertragung UL begibt sich der Funkknoten 10 von dem Sleep-Modus in einen Empfangsmodus und öffnet ein erstes Empfangsfenster RX1. Der Zeitabstand V_RX1 berechnet sich ab dem Ende der Uplink-Übertragung UL und ist beispielsweise ein Zeitwert zwischen 1 s und 15 s. Das erste Empfangsfenster RX1 ist eine bestimmte Zeitdauer t_RX1 geöffnet, die der Funkknoten 10 benötigt, um eine Downlink-Übertragung DL zu empfangen. Sobald die Zeitdauer t_RX1 abgelaufen ist, wird das erste Empfangsfenster RX1 wieder geschlossen. Der Funkknoten 10 begibt sich nun vorzugsweise von dem Empfangsmodus wieder in den Sleep-Modus.

Für den Fall, dass der Funkknoten 10 während des ersten Empfangsfensters RX1 keine Downlink-Übertragung DL empfangen hat, öffnet der Funkknoten 10 ein zweites Empfangsfenster RX2, welches in einem bestimmten Zeitabstand V_RX2, z. B. ein Zeitwert zwischen 2 s und 16 s, nach dem Beenden der Uplink-Übertragung UL geöffnet wird. Das zweite Empfangsfenster RX2 ist somit zeitlich versetzt zu dem ersten Empfangsfenster RX1. Hierfür begibt sich der Funkknoten 10 von dem Sleep-Modus in den Empfangsmodus. Das zweite Empfangsfenster RX2 ist ebenfalls eine bestimmte Zeitdauer t_RX2 geöffnet, die der Funkknoten 10 benötigt, um eine Downlink-Übertragung DL zu empfangen. Nach Ablauf der Zeitspanne t_RX2 wird das zweite Empfangsfenster RX2 wieder geschlossen und der Funkknoten 10 begibt sich vorzugsweise wieder in den Sleep-Modus.

Zusätzlich zu den Empfangsfenstern RX1 und RX2 kann der Funkknoten 10 weitere bzw. dritte Empfangsfenster RXB öffnen, wie in Fig. 4 dargestellt. Zum Öffnen der Empfangsfenster RXB begibt sich der Funkknoten 10 von dem Sleep-Modus in den Empfangsmodus. Das Empfangsfenster RXB ist eine bestimmte Zeitdauer t_RXB geöffnet, die der Funkknoten 10 benötigt, um eine Downlink-Übertragung DL zu empfangen. Nach Ablauf der Zeitdauer t_RXB wird das Empfangsfenster RXB wieder geschlossen und der Funkknoten 10 begibt sich vorzugsweise wieder in den Sleep-Modus. Die Empfangsfenster RXB werden in gewissen Zeitabständen V_RXB, insbesondere unabhängig von einer Uplink-Übertragung UL, geöffnet. Das bedeutet, dass periodisch, also fortlaufend nach Ablauf des Zeitabstands V_RXB, ein neues Empfangsfenster RXB geöffnet wird.

Die Empfangsfenster RX1, RX2 und RXB können gleich lange oder unterschiedlich lange geöffnet bleiben. Somit können die Zeitdauern t_RX1, t_RX2 und t_RXB gleich oder unterschiedlich sein.

Für jede Uplink-Übertragung UL und jede Verarbeitung einer empfangenen Downlink-Übertragung DL benötigt der Funkknoten 10 Energie, die ihm durch die Batterie 15 zur Verfügung gestellt wird. Zwar kann der Funkknoten 10 die Uplink-Übertragung UL in gewissem Maße beeinflussen und somit Energie einsparen. Dies ist jedoch bei den Downlink-Übertragungen DL nicht möglich, da der Funkknoten die Downlink-Übertragungen DL des Netzwerkservers 3 und/oder des Anwendungsserver 7 immer empfängt. Bei der Verarbeitung der empfangenen Downlink-Übertragung DL wird vom Funkknoten 10 das entsprechende Datentelegramme oder der Teil des Datentelegramms oder das entsprechende Kommando oder der Teil des Kommandos mittels einer Datenverarbeitung ausgeführt bzw. verarbeitet, wodurch Energie verbraucht wird. Da der Funkknoten 10 auf die Downlink-Übertragung DL keinen Einfluss nehmen kann, kann der Fall eintreten, dass der Empfang von Downlink-Übertragungen DL und die anschließende Verarbeitung zu viel Energie verbraucht, sodass die Kapazität der Batterie 16 vorzeitig aufgebraucht ist und die vorgesehene Standzeit von zehn Jahren nicht erreicht wird.

Gemäß dem erfindungsgemäßen Verfahren wird mittels eines Credit-Punkte-Systems während des Betriebs des Funkknotens 10 Einfluss auf den Energieverbrauch des Funkknotens 10 genommen, wodurch der Energieverbrauch effektiv reduziert wird. Das Credit-Punkte-System umfasst einen Credit-Punkte-Stand N, der die aktuell für eine bidirektionale Funkübertragung zur Verfügung stehende Energie oder Stromstärke oder Spannung des Funkknotens 10 widerspiegelt. Der Credit-Punkte-Stand N besagt somit, wie viel Energie dem Funkknoten 10 momentan für eine bidirektionale Funkübertragung, also eine Uplink-Übertragung UL und die Verarbeitung einer Downlink-Übertragung DL bereitgestellt wird bzw. wie viel Energie der Funkknoten momentan verbrauchen kann. Erfindungsgemäß wird in Abhängigkeit des Credit-Punkte-Stands N das Versenden oder Nichtversenden einer Uplink-Übertragung UL und/oder ein aktuelles Verarbeiten oder Nicht-Verarbeiten einer empfangenen Downlink-Übertragung DL gesteuert.

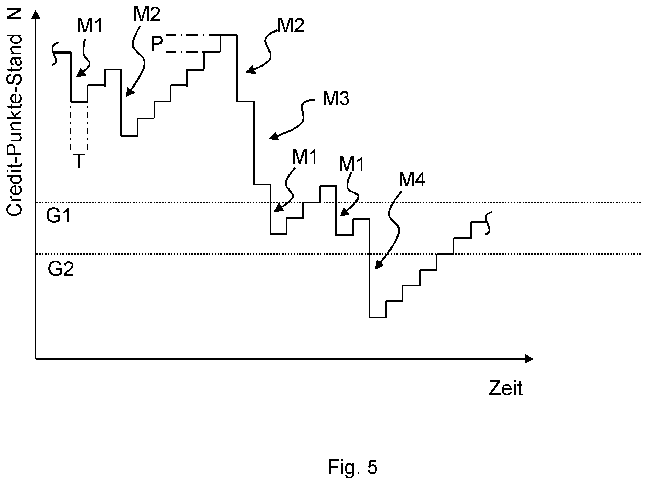

Der Credit-Punkte-Stand N umfasst eine bestimmte Anzahl von Credit-Punkten, welche sich, wie in Fig. 5 gezeigt, fortlaufend ändert. Ein Credit-Punkt entspricht hierbei einem bestimmten Energiebedarf. Insbesondere kann es bei einem Credit-Punkt um eine bestimmte Menge von Energie oder Stromstärke oder Spannung handeln. Zweckmäßigerweise ist ein Credit-Punkt eine ganze Zahl. Zweckmäßigerweise wird der Credit-Punkte-Stand N von dem Funkknoten 10, z. B. in jeder Uplink-Übertragung UL, an den Netzwerkserver 3 und/oder den Anwendungsserver 7 übermittelt.

Wie in Fig. 5 gezeigt, wird der Credit-Punkte-Stand N pro Zeiteinheit T um eine vorbestimme Zahl von Credit-Punkten P erhöht. Die vorbestimmte Zahl von Credit-Punkten P ist insbesondere größer oder gleich 1. Insbesondere wird die vorbestimmte Zahl von Credit-Punkte P dem aktuellen Credit-Punkte-Stand N hinzuaddiert bzw. zugerechnet. Somit steigt die dem Funkknoten 10 für eine bidirektionale Datenübertragung momentan zur Verfügung stehende Energie über die Zeit an. Bei der Zeiteinheit T handelt es sich um eine bestimmte Anzahl von Sekunden, Minuten, Stunden oder Tagen.

Beim Versenden einer Uplink-Übertragung UL und/oder bei der Durchführung von Datenverarbeitungstätigkeiten der empfangenen Downlink-Übertragung wird der Credit-Punkte-Stand N des Funkknotens 10 um eine vorbestimmte Zahl von Credit-Punkten M1-M4 reduziert, vgl. Fig. 5. Jeder Art bidirektionaler Datenübertragung, also jeder Art einer Uplink-Übertragung UL und einer Downlink-Übertragung DL ist eine vorbestimmte Zahl von Credit-Punkten M1-M4 in Abhängigkeit des benötigten Energiebedarfs der Übertragung und/oder der Verarbeitung zugeordnet. Hierbei ist eine vorbestimmte Zahl von Credit-Punkten M1-M4 auch dem Empfang der Downlink-Übertragung zugeordnet.

Alternativ kann der Funkknoten 10 den benötigten Energieverbrauch basierend auf der Größe der Uplink-Übertragung UL bzw. der Downlink-Übertragung DL bestimmen. Hierfür ermittelt bzw. schätzt der Funkknoten 10 die Größe der entsprechenden Übertragung. Basierend auf der Größe der Uplink-Übertragung UL kann der Funkknoten 10 bestimmen oder schätzen, wie viel Zeit für die Uplink-Übertragung UL benötigt wird. Zudem bestimmt oder schätzt der Funkknoten 10 ausgehend von der Größe der Downlink-Übertragung DL, wie viel Zeit er für deren Empfang benötigt. Dem Funkknoten 10 ist einerseits der Energiebedarf pro Zeit beim Aussenden einer Uplink-Übertragung UL bekannt und andererseits der Energiebedarf pro Zeiteinheit bei dem Empfang einer Downlink-Übertragung DL bekannt. Basierend auf dem Energiebedarf pro Zeiteinheit und der für eine Uplink-Übertragung UL bzw. den Empfang einer Downlink-Übertragung DL benötigten Zeit ermittelt oder schätzt der Funkknoten 10 den entsprechenden Energiebedarf. Der Gesamtenergiebedarf für eine bidirektionale Datenübertragung ist die Summe aus dem Energiebedarf der Uplink-Übertragung UL und dem Energiebedarf des Empfangs der Downlink-Übertragung DL. Entsprechend dem Gesamtenergiebedarf werden der bidirektionalen Funkübertragung eine vorbestimmte Zahl von Credit-Punkten M1-M4 zugeordnet.

Um diese vorbestimmte Zahl von Credit-Punkten M1-M4 wird der Credit-Punkte-Stand N bei einer bidirektionalen Datenübertragung reduziert. So benötigen manche bidirektionalen Datenübertragungen nur wenig Energie, wodurch der Credit-Punkte-Stand N nur um wenige Credit-Punkte M1 reduziert wird. Bestimmte bidirektionale Datenübertragungen, z. B. Synchronisationen oder Veränderungen des Sendeintervalls oder Veränderungen des Inhalts einer Uplink-Übertragung, benötigten hingegen mehr Energie, weshalb bei diesen bidirektionalen Datenübertragungen der Credit-Punkte-Stand N um eine größere Zahl von Credit-Punkten M4 reduziert wird. Durch die unterschiedliche Abstufung der Zahl von Credit-Punkten M1-M4 wird der tatsächliche Energiebedarf einer bidirektionalen Datenübertragung, also einer Uplink-Übertragung UL und der Verarbeitung einer Downlink-Übertragung DL berücksichtigt.

Fig. 5. zeigt exemplarisch den zeitlichen Verlauf des Credit-Punkte-Stands N. Der Credit-Punkte-Stand N wird zunächst aufgrund einer bidirektionale Datenübertragung um eine Zahl von Credit-Punkten M1 reduziert. Anschließend steigt der Credit-Punkte-Stand N über zwei Zeiteinheiten T wieder an, wobei der Credit-Punkte-Stand N pro Zeiteinheit T um eine bestimmte Zahl von Credit-Punkten P erhöht wird. Durch eine weitere bidirektionale Datenübertragung wird der Credit-Punkte-Stand N erneut um eine Zahl von Credit-Punkten M2 reduziert. Anschließend steigt der Credit-Punkte-Stand N wieder an. Durch mehrere weitere bidirektionale Datenübertragungen wird der Credit-Punkte-Stand N zunächst um die Zahl von Credit-Punkten M2 und dann um die Zahl von Credit-Punkten M3 reduziert.

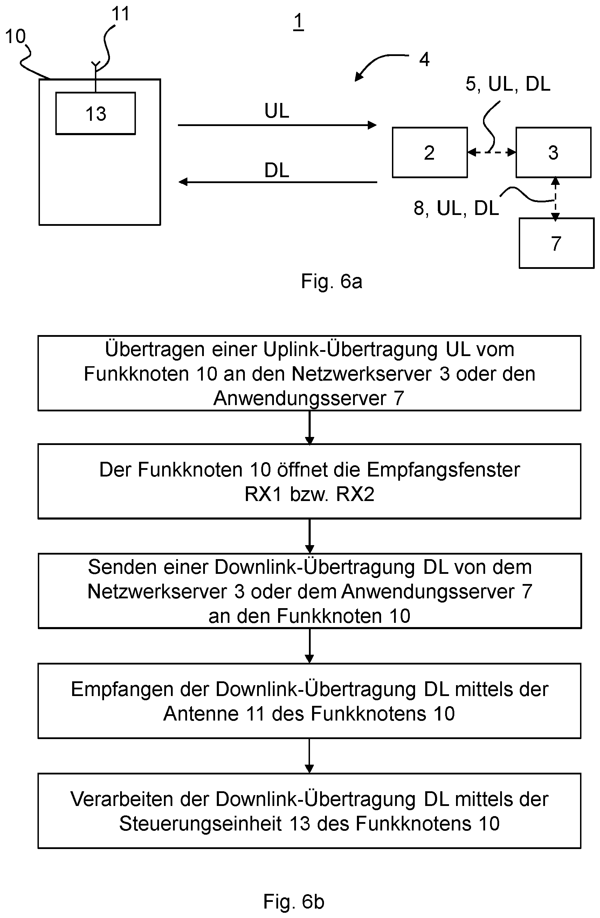

Die bidirektionale Datenübertragung zwischen dem Funkknoten 10 und dem Netzwerkserver 3 bzw. dem Anwendungsserver 7 findet hierbei nach dem Verfahren gemäß der Figuren 6a und 6b statt. Bei einer Uplink-Übertragung UL wird ein Datentelegramm oder ein Teil eines Datentelegramms oder ein Request oder ein Teil eines Requests oder eine Warn-Nachricht oder eine Response oder ein Teil einer Response vom Funkknoten 10 an den Netzwerkserver 3 bzw. den Anwendungsserver 7 übertragen. Im Anschluss daran öffnet der Funkknoten 10, wie oben beschrieben, die Empfangsfenster RX1 bzw. RX2. Der Netzwerkserver 3 bzw. der Anwendungsserver 7 übermittelt als Antwort auf die Uplink-Übertragung UL ein Datentelegramm oder ein Teil eines Datentelegramms oder ein Kommando oder ein Teil eines Kommandos in einer Downlink-Übertragung DL an den Funkknoten 10, welcher die Downlink-Übertragung DL mittels seiner Antenne 11 innerhalb eines der Empfangsfenster RX1 bzw. RX2 empfängt. Hierbei kann es sich insbesondere um eine Antwort des Netzwerkservers 3 bzw. des Anwendungsservers 7 auf die Uplink-Übertragung UL des Funkknotens 10 handeln. Anschließend verarbeitet der Funkknoten 10 die empfangene Downlink-Übertragung DL mittels der Steuerungseinrichtung 13. Da der Netzwerkserver 3 bzw. der Anwendungsserver 7 die Downlink-Übertragung DL als Antwort auf eine Uplink-Übertragung UL aussendet, wird die bidirektionale Datenübertragung DL von dem Funkknoten 10 initialisiert. Zweckmäßigerweise sendet der Funkknoten 10 daraufhin eine Antwort bzw. Response auf die Downlink-Übertragung DL aus.

Durch eine bidirektionale Datenübertragung, also durch die Uplink-Übertragung UL und den Empfang einer Downlink-Übertragung DL kann der Credit-Punkte-Stand N unter einen ersten Grenzwert G1 fallen, vgl. Fig. 5. Der Grenzwert G1 ist einem bestimmten Wert des Credit-Punkte-Stand N zugeordnet. Sobald der Credit-Punkte-Stand N unter den ersten Grenzwert G1 fällt, werden vom Funkknoten 10 verschiedene Energiesparmaßnahmen ergriffen, um den Energieverbrauch zu reduzieren. Zweckmäßigerweise kennt der Netzwerkserver 3 und/oder der Anwendungsserver 7 den Credit-Punkte-Stand N des Funkknotens 10 und erkennt dadurch, dass der Credit-Punkte-Stand N unter den ersten Grenzwert G1 gefallen ist. Alternativ oder zusätzlich kann der Funkknoten 10 ein Alarm-Signal oder einen besonderen Hinweis an den Netzwerkserver 3 und/oder den Anwendungsserver 7 übermitteln, wobei diese darauf hingewiesen werden, dass der Credit-Punkte-Stand N unterhalb des ersten Grenzwertes G1 liegt.

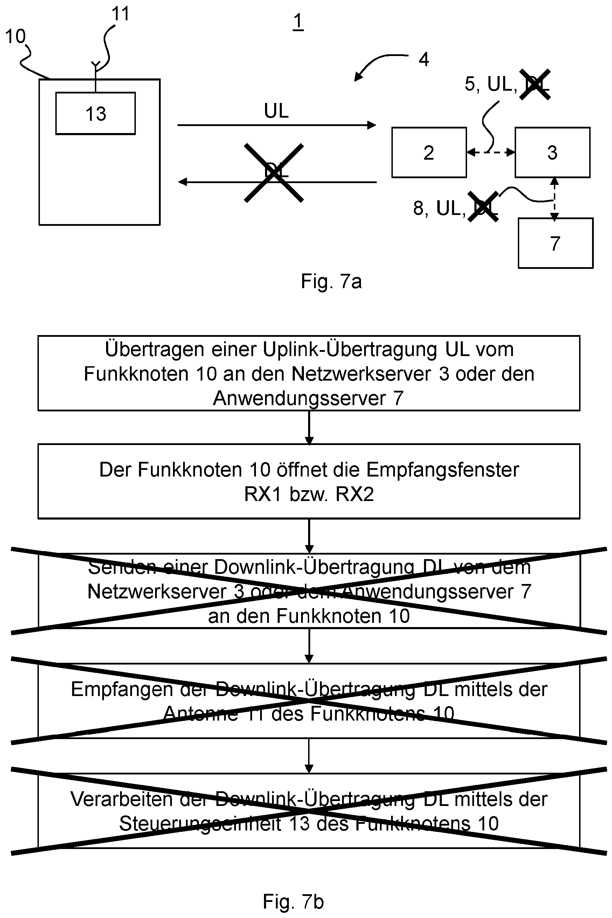

Figuren 7a und 7b zeigen das erfindungsgemäße Verfahren zur Reduzierung des Energieverbrauchs bei der bidirektionalen Datenübertragung zwischen dem Funkknoten 10 und dem Netzwerkserver 3 bzw. dem Anwendungsserver 7 gemäß einem ersten Ausführungsbeispiel, wenn der Credit-Punkte-Stand N z. B. den ersten Grenzwert G1 unterschritten hat. Trotz der Energiesparmaßnahme sendet der Funkknoten 10 nach wie vor eine Uplink-Übertragung UL aus, vgl. Figuren 7a und 7b. Zudem öffnet der Funkknoten 10 nach der Uplink-Übertragung UL die Empfangsfenster RX1 bzw. RX2. Der Netzwerkserver 3 und/oder der Anwendungsserver 7 kennen allerdings den Credit-Punkte-Stand N des Funkknotens 10 bzw. wurden vom Funkknoten 10 benachrichtigt, dass der Credit-Punkte-Stand N unterhalb des ersten Grenzwerts 10 liegt. Infolgedessen sendet der Netzwerkserver 3 und/oder der Anwendungsserver 7 keine Downlink-Übertragung DL an den Funkknoten 10 bzw. das Gateway 2 leitet diese nicht an den Funkknoten 10 weiter. Hierdurch empfängt der Funkknoten 10 keine Downlink-Übertragung DL und muss diese somit nicht verarbeiten. Hierdurch wird in effektiver Weise Energie auf Seiten des Funkknotens 10 eingespart. Infolgedessen wird eine weitere Reduktion des Credit-Punkte-Stands N aufgrund von Downlink-Übertragungen DL vermieden. Im weiteren Verlauf kann der Credit-Punkte-Stand N pro Zeiteinheit T um die vorbestimme Zahl von Credit-Punkten P ansteigen, sodass der Credit-Punkte-Stand N den ersten Grenzwert G1 wieder überschreiten kann. Die Energiesparmaßnahme gemäß Figen 7a und 7b wird bei der Überschreitung des ersten Grenzwerts G1 aufgehoben und die bidirektionale Datenübertragung läuft wieder gemäß dem Verfahren nach den Figuren 6a und 6b ab.

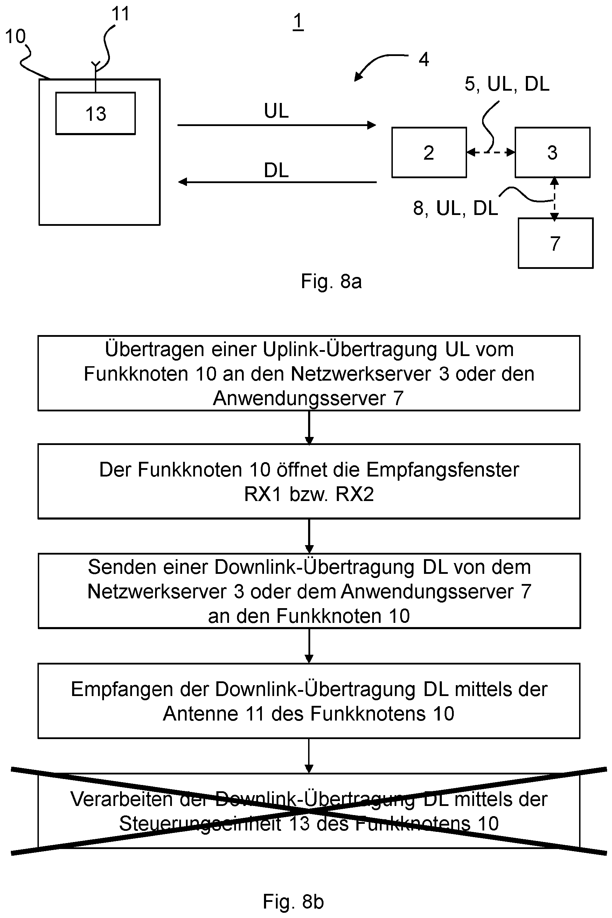

Figuren 8a und 8b zeigen ein zweites Ausführungsbeispiel des erfindungsgemäßen Verfahrens zur Reduktion des Energieverbrauchs bei der bidirektionalen Übertragung zwischen dem Netzwerkserver 3 und/oder dem Anwendungsserver 7 und dem Funkknoten 10. Die entsprechende Energiesparmaßnahme gemäß der Figuren 8a und 8b kann umgesetzt werden, z. B. sobald der Credit-Punkte-Stand unter den Grenzwert G1 fällt. Die Energiesparmaßnahme des zweiten Ausführungsbeispiels stellt insbesondere eine Alternative zu der Energiesparmaßnahme der Figuren 7a und 7b dar. Auch hierbei sendet der Funkknoten 10 eine Uplink-Übertragung UL aus und öffnet anschließend die Empfangsfenster RX1 bzw. RX2. Bei der Energiesparmaßnahme gemäß Figuren 8a und 8b kann der Credit-Punkte-Stand N dem Netzwerkserver 3 und/oder dem Anwendungsserver 7 bekannt sein bzw. diese wurden auf diesen hingewiesen. Allerdings sendet der Netzwerkserver 3 und/oder der Anwendungsserver 7 weiterhin eine Downlink-Übertragung DL an den Funkknoten 10 aus. Da der Funkknoten 10 die Empfangsfenster RX1 bzw. RX2 geöffnet hat, empfängt dieser die Downlink-Übertragung DL. Allerdings verarbeitet die Steuerungseinheit 13 des Funkknotens 10 die Downlink-Übertragung DL nicht. Hierdurch kann trotz einer empfangenen Downlink-Übertragung DL in effektiver Weise Energie eingespart werden, da die empfangene Downlink-Übertragung DL nicht verarbeitet wird. Zweckmäßigerweise wird zudem keine Antwort auf die aktuell empfangene Downlink-Übertragung DL ausgesendet. Somit steigt im weiteren Verlauf der Credit-Punkte-Stand N pro Zeiteinheit T um die vorbestimme Zahl von Credit-Punkten P an, bis der erste Grenzwert G1 überschritten wird und die Energiesparmaßnahme gemäß den Figuren 8a und 8b aufgehoben werden kann.

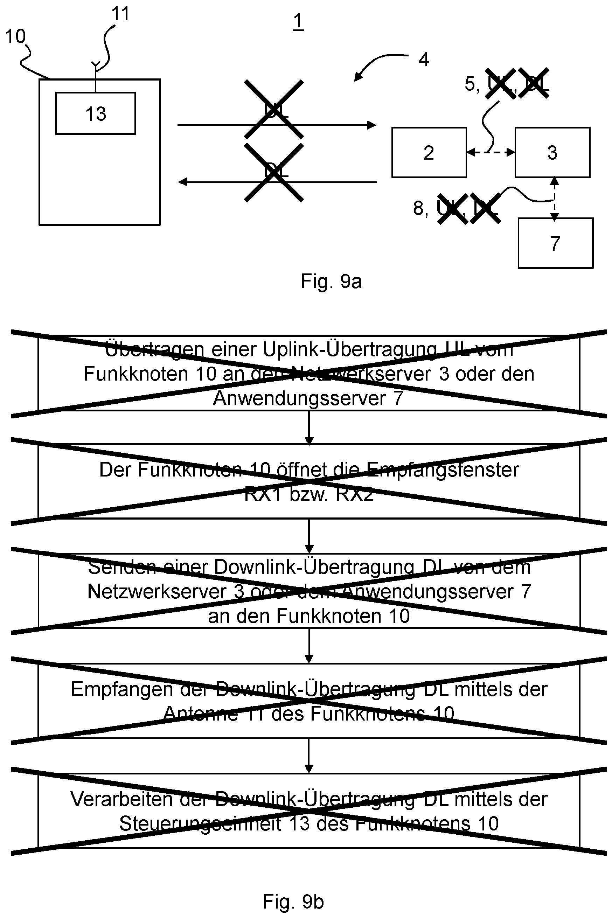

Zweckmäßigerweise ist für den Credit-Punkte-Stand N ein zweiter Grenzwert G2 vorgesehen, welchem ein im Vergleich zum ersten Grenzwert G1 geringerer Credit-Punkte-Stand N zugeordnet ist, vgl. Fig. 5. Wenn der zweite Grenzwert G2 trotz der Energiesparmaßnahmen gemäß der Fig. 7a-8b unterschritten wird, wird eine zusätzliche Energiesparmaßnahme ergriffen. Hierbei handelt es sich um ein drittes Ausführungsbeispiel des erfindungsgemäßen Verfahren zur Reduktion des Energieverbrauchs bei der bidirektionalen Übertragung zwischen dem Netzwerkserver 3 und/oder dem Anwendungsserver 7 und dem Funkknoten 10 gemäß den Figuren 9a und 9b. Gemäß dem dritten Ausführungsbeispiel sendet der Funkknoten 10 keine Uplink-Übertragung UL mehr aus. Infolgedessen wird keine Downlink-Übertragung DL von dem Netzwerkserver 3 und/oder dem Anwendungsserver 7 als Antwort auf die Uplink-Übertragung UL ausgesendet. Selbst für den Fall, dass eine Downlink-Übertragung DL stattfinden sollte, könnte der Funkknoten 10 diese nicht empfangen, da er keine Empfangsfenster RX1 bzw. RX2 öffnet. Somit stellt der Funkknoten 10 seine Funkaktivität für die bidirektionale Datenübertragung ein, wenn der Credit-Punkte-Stand N unterhalb des zweiten Grenzwertes G2 liegt. Hierdurch kann besonders viel Energie einspart werden. Der Credit-Punkte-Stand N kann somit pro Zeiteinheit T um die vorbestimme Zahl von Credit-Punkten P ansteigen, ohne dass der Credit-Punkte-Stand N aufgrund einer bidirektionalen Datenübertragung sinkt. Sobald der Credit-Punkte-Stand N den zweiten Grenzwert G2 überschritten hat, wird die Energiesparmaßnahme gemäß den Figuren 9a und 9b aufgehoben und der Funkknoten 10 wird mit den Energiesparmaßnahmen gemäß der Figuren 7a und 7b bzw. 8a und 8b betrieben, bis der Credit-Punkte-Stand N den ersten Grenzwert G1 überschritten hat.

Zweckmäßigerweise werden das Credit-Punkte-System und insbesondere das erfindungsgemäße Verfahren zur Energieeinsparung von der Steuerungseinheit 13 des Funkknotens 10 gesteuert.

### BEZUGSZEICHENLISTE

- 1: LoRaWAN
- 2: Gateway
- 3: Netzwerkserver
- 4: Datenübertragung
- 5: Datenübertragung
- 6: Versorgungsleitung
- 7: Anwendungsserver
- 8: Datenübertragung
- 10: Funkknoten
- 11: Antenne
- 12: Sensor
- 13: Steuerungseinheit
- 15: Batterie
- 16: Speicher

- UL: Uplink-Übertragung
- DL: Downlink-Übertragung
- G1: erster Grenzwert
- G2: zweiter Grenzwert

- RX1: Empfangsfenster
- RX2: Empfangsfenster
- RXB: Empfangsfenster
- t_UL: Uplink-Übertragungsdauer
- t_RX1: Zeitdauer
- t_RX2: Zeitdauer
- t_RXB: Zeitdauer
- V_RX1: Zeitabstand
- V_RX2: Zeitabstand
- V_RXB: Zeitabstand
- T: Zeiteinheit
- P: Credit-Punkte
- N: Credit-Punkte-Stand
- M1-M4: Credit-Punkte

## Patentansprüche

1. Verfahren zum Energiemanagement eines batteriebetriebenen Funkknotens (10) für eine bidirektionale Datenübertragung in einem Long Range Wide Area Network, LoRaWAN, (1) zwischen dem Funkknoten (10) und einem Netzwerkserver (3) und/oder einem Anwendungsserver (4) über mindestens ein Gateway (2),
wobei der Funkknoten (10) für eine Uplink-Übertragung (UL) in einen Sendemodus und für einen Downlink-Empfang in einen Empfangsmodus übergeht,
wobei der Funkknoten (10) nach einer Uplink-Übertragung (UL) mindestens ein Empfangsfenster (RX1, RX2) öffnet, und
wobei auf Basis eines Credit-Punkte-Systems während des Betriebs des Funkknotens (10) ein aktuelles Versenden oder Nichtversenden einer Uplink-Übertragung (UL) und ein aktuelles Verarbeiten oder Nicht-Verarbeiten einer Downlink-Übertragung (DL) abhängig von einem Credit-Punkte-Stand (N) des Credit-Punkte-Systems des Funkknotens (10) gesteuert wird.

2. Verfahren nach Anspruch 1, **dadurch gekennzeichnet, dass** der Credit-Punkte-Stand (N) des Funkknotens (10) pro verstrichener Zeiteinheit (T) um eine vorbestimmte Zahl von Credit-Punkten (P) erhöht wird und/oder dass der Credit-Punkte-Stand (N) des Funkknotens (10) wegen Durchführung einer vom Funkknoten (10) vorgenommenen Uplink-Übertragung (UL) und/oder Verarbeitung einer Downlink-Übertragung (DL) reduziert wird.

3. Verfahren nach einem der vorhergehenden Ansprüche, **dadurch gekennzeichnet, dass** es sich bei der Uplink-Übertragung (UL) um ein Datentelegramm oder einen Teil eines Datentelegramms oder einen Request oder einen Teil eines Requests oder eine Warn-Nachricht oder eine Response oder einen Teil einer Response handelt.

4. Verfahren nach einem der vorhergehenden Ansprüche, **dadurch gekennzeichnet, dass** es sich bei der Verarbeitung um ein Ausführen oder eine Datenverarbeitung eines empfangenen Datentelegramms oder eines Teils eines Datentelegramms oder eines Kommandos oder eines Teils eines Kommandos einer Downlink-Übertragung (DL) durch den Funkknoten (10) handelt.

5. Verfahren nach einem der vorhergehenden Ansprüche, **dadurch gekennzeichnet, dass** in dem Credit-Punkte-System eine vorbestimmte Zahl von Credit-Punkten einer bestimmten Art von Datentelegramm oder Kommando oder jeweils eines Teils davon zugeordnet ist oder dass in dem Credit-Punkte-System eine vorbestimmte Zahl von Credit-Punkten in Abhängigkeit der Größe einer Uplink-Übertragung (UL) und/oder einer Downlink-Übertragung (DL) zugeordnet ist.

6. Verfahren nach einem der vorhergehenden Ansprüche, **dadurch gekennzeichnet, dass** das Credit-Punkte-System von einer Steuerungseinheit (13) des Funkknotens (10) gesteuert wird.

7. Verfahren nach einem der vorhergehenden Ansprüche, **dadurch gekennzeichnet, dass** der Credit-Punkte-Stand (N), insbesondere in einer Uplink-Übertragung (UL), an den Netzwerkserver (3) und/oder den Anwendungsserver (4) übermittelt wird.

8. Verfahren nach einem der vorhergehenden Ansprüche, **dadurch gekennzeichnet, dass** in Abhängigkeit des Credit-Punkte-Stands (N) des Funkknotens (10) folgende Maßnahmen getroffen werden:
- der Netzwerkserver und/oder der Anwendungsserver (3) senden keine Downlink-Übertragung (DL) an den Funkknoten (10); und/oder
- der Funkknoten (10) verarbeitet eine empfangene Downlink-Übertragung (DL) nicht; und/oder
- der Funkknoten (10) sendet keine Antwort auf eine empfangene Downlink-Übertragung (DL) aus; und/oder
- der Funkknoten (10) versendet eine aktuell zu versendende Uplink-Übertragung (UL) nicht.

9. Verfahren nach Anspruch 8, **dadurch gekennzeichnet, dass** mindestens eine der Maßnahmen bei Erreichen eines ersten Grenzwerts (G1) getroffen wird, wobei insbesondere vorgesehen ist, dass der Funkknoten (10) bei Erreichen des ersten Grenzwerts (G1) eine Mitteilung an den Netzwerkserver 3 und/oder den Anwendungsserver 7 aussendet.

10. Verfahren nach Anspruch 8 oder 9, **dadurch gekennzeichnet, dass** mindestens eine der Maßnahmen bei Erreichen eines zweiten Grenzwerts (G2) getroffen wird, wobei dem zweiten Grenzwert (G2) im Vergleich zum ersten Grenzwert (G1) ein geringerer Credit-Punkte-Stand (N) zugeordnet ist.

11. Verfahren nach einem der vorhergehenden Ansprüche, **dadurch gekennzeichnet, dass** das mindestens eine Empfangsfenster (RX1, RX2) in einem bestimmten Zeitabstand (V_RX1, V_RX2) nach dem Ende der Uplink-Übertragung (UL) geöffnet wird.

12. Verfahren nach einem der vorhergehenden Ansprüche, **dadurch gekennzeichnet, dass** ein erstes Empfangsfenster (RX1) und ein zweites Empfangsfenster (RX2) vorgesehen sind und das zweite Empfangsfenster (RX2) geöffnet wird, wenn in dem ersten Empfangsfenster (RX1) keine Datentelegramme oder Kommandos oder jeweils ein Teil davon empfangen werden, wobei insbesondere vorgesehen ist, dass das zweite Empfangsfenster (RX2) zeitlich beabstandet zu dem ersten Empfangsfenster (RX1) geöffnet wird.

13. Verfahren nach einem der vorhergehenden Ansprüche, **dadurch gekennzeichnet, dass** weitere Empfangsfenster (RXB) vorgesehen sind, welche periodisch in vorbestimmten Zeitabständen (V_RXB) geöffnet werden.

14. Verfahren nach einem der vorhergehenden Ansprüche, **dadurch gekennzeichnet, dass** der Funkknoten (10) für eine Uplink-Übertragung (UL) aus einem Sleep-Modus in einen Sendemodus und/oder für einen Downlink-Empfang aus einem Sleep-Modus in einen Empfangsmodus übergeht.

15. Verfahren nach einem der vorhergehenden Ansprüche, **dadurch gekennzeichnet, dass** der Funkknoten (10) nach der Uplink-Übertragung (UL) und/oder nach dem Schließen eines Empfangsfensters (RX1, RX2, RXB) in einen Sleep-Modus übergeht.

16. Funkknoten (10) umfassend
eine Antenne (11),
eine Steuerungseinheit (13),
eine Batterie (15) sowie
eine Sensoreinrichtung und/oder eine Aktoreinrichtung,
**dadurch gekennzeichnet, dass**
der Funkknoten (10) zur Durchführung des Verfahrens nach einem der vorhergehenden Ansprüche hergerichtet ist.

## Claims

1. Method for energy management of a battery-powered wireless node (10) for bidirectional data transmission in a Long Range Wide Area Network, LoRaWAN, (1) between the wireless node (10) and a network server (3) and/or an application server (4) via at least one gateway (2),
wherein the wireless node (10) goes into a transmit mode for an uplink transmission (UL), and into a receive mode for receiving a downlink,
wherein the wireless node (10) opens at least one receive window (RX1, RX2) after an uplink transmission (UL), and wherein, on the basis of a credit point system during operation of the wireless node (10), a current sending or not-sending of an uplink transmission (UL) and a current processing or not-processing of a downlink transmission (DL) is controlled according to a credit point score (N) of the credit point system of the wireless node (10).

2. Method according to Claim 1, **characterized in that** the credit point score (N) of the wireless node (10) is increased for each elapsed unit of time (T) by a predetermined number of credit points (P), and/or **in that**, as a result of implementation of an uplink transmission (UL) performed by the wireless node (10) and/or processing of a downlink transmission (DL), the credit point score (N) of the wireless node (10) is reduced.

3. Method according to either of the preceding claims, **characterized in that** the uplink transmission (UL) involves a datagram or a part of a datagram or a request or a part of a request or a warning message or a response or a part of a response.

4. Method according to any of the preceding claims, **characterized in that** the processing involves the wireless node (10) administering or data-processing a received datagram or a part of a datagram or a command or a part of a command in a downlink transmission (DL).

5. Method according to any of the preceding claims, **characterized in that**, in the credit point system, a predetermined number of credit points are allocated to a certain type of datagram or command or a part of either, or **in that**, in the credit point system, a predetermined number of credit points are allocated according to the size of an uplink transmission (UL) and/or of a downlink transmission (DL).

6. Method according to any of the preceding claims, **characterized in that** the credit point system is controlled by a control unit (13) of the wireless node (10).

7. Method according to any of the preceding claims, **characterized in that** the credit point score (N), in particular in an uplink transmission (UL), is transferred to the network server (3) and/or the application server (4)

8. Method according to any of the preceding claims, **characterized in that** the following measures are taken according to the credit point score (N) of the wireless node (10):
- the network server and/or the application server (3) do not send a downlink transmission (DL) to the wireless node (10); and/or
- the wireless node (10) does not process a received downlink transmission (DL); and/or
- the wireless node (10) does not send a response to a received downlink transmission (DL); and/or
- the wireless node (10) does not send an uplink transmission (UL) currently due to be sent.

9. Method according to Claim 8, **characterized in that** at least one of the measures is taken when a first limit value (G1) is reached, where it is particularly provided that, when the first limit value (G1) is reached, the wireless node (10) sends a notification to the network server 3 and/or the application server 7.

10. Method according to Claim 8 or 9, **characterized in that** at least one of the measures is taken when a second limit value (G2) is reached, where a lower credit point score (N) is assigned to the second limit value (G2) compared with the first limit value (G1).

11. Method according to any of the preceding claims, **characterized in that** the at least one receive window (RX1, RX2) is opened at a certain time interval (V_RX1, V_RX2) after the end of the uplink transmission (UL).

12. Method according to any of the preceding claims, **characterized in that** a first receive window (RX1) and a second receive window (RX2) are provided, and the second receive window (RX2) is opened if no datagrams or commands or a part of either are received in the first receive window (RX1), where it is particularly provided that the second receive window (RX2) is opened at a time offset from the first receive window (RX1).

13. Method according to any of the preceding claims, **characterized in that** further receive windows (RXB) are provided, which are opened periodically at predetermined time intervals (V_RXB).

14. Method according to any of the preceding claims, **characterized in that** the wireless node (10) goes from a sleep mode into a transmit mode for an uplink transmission (UL), and/or from a sleep mode into a receive mode for receiving a downlink.

15. Method according to any of the preceding claims, **characterized in that** the wireless node (10) goes into a sleep mode after the uplink transmission (UL) and/or after closing a receive window (RX1, RX2, RXB).

16. Wireless node (10) comprising
an antenna (11),
a control unit (13),
a battery (15) and
a sensor device and/or an actuator device,
**characterized in that**
the wireless node (10) is designed to implement the method according to any of the preceding claims.

## Revendications

1. Procédé de gestion de l'énergie d'un nœud radio (10) alimenté par batterie pour une transmission de données bidirectionnelle dans un réseau étendu de longue portée, LoRaWAN, (1) entre le nœud radio (10) et un serveur de réseau (3) et/ou un serveur d'application (4) par le biais d'au moins une passerelle (2),
le nœud radio (10) passant en mode d'émission pour une transmission en liaison montante (UL) et en mode de réception pour une réception en liaison descendante,
le nœud radio (10) ouvrant au moins une fenêtre de réception (RX1, RX2) après une transmission en liaison montante (UL), et
sur la base d'un système de points de crédit pendant le fonctionnement du nœud radio (10), un envoi ou un non-envoi actuel d'une transmission en liaison montante (UL) et un traitement ou non traitement actuel d'une transmission en liaison descendante (DL) étant commandés en fonction d'un solde de points de crédit (N) du système de points de crédit du nœud radio (10).

2. Procédé selon la revendication 1, **caractérisé en ce que** le solde de points de crédit (N) du nœud radio (10) est augmenté d'un nombre prédéterminé de points de crédit (P) par unité de temps (T) écoulée et/ou **en ce que** le solde de points de crédit (N) du nœud radio (10) est réduit en raison de l'exécution d'une transmission en liaison montante (UL) effectuée par le nœud radio (10) et/ou du traitement d'une transmission en liaison descendante (DL).

3. Procédé selon l'une des revendications précédentes, **caractérisé en ce que** la transmission en liaison montante (UL) est un télégramme de données ou une partie d'un télégramme de données ou une requête ou une partie d'une requête ou un message d'avertissement ou une réponse ou une partie d'une réponse.

4. Procédé selon l'une des revendications précédentes, **caractérisé en ce que** le traitement consiste en une exécution ou un traitement de données d'un télégramme de données reçu ou d'une partie d'un télégramme de données ou d'une instruction ou d'une partie d'une instruction d'une transmission en liaison descendante (DL) par le nœud radio (10).

5. Procédé selon l'une des revendications précédentes, **caractérisé en ce que** dans le système de points de crédit, un nombre prédéterminé de points de crédit est attribué à un type déterminé de télégramme de données ou d'instruction ou respectivement à une partie de ceux-ci, ou **en ce que** dans le système de points de crédit, un nombre prédéterminé de points de crédit est attribué en fonction de la taille d'une transmission en liaison montante (UL) et/ou d'une transmission en liaison descendante (DL).

6. Procédé selon l'une des revendications précédentes, **caractérisé en ce que** le système de points de crédit est commandé par une unité de commande (13) du nœud radio (10).

7. Procédé selon l'une des revendications précédentes, **caractérisé en ce que** le solde de points de crédit (N), en particulier dans une transmission en liaison montante (UL), est communiqué au serveur de réseau (3) et/ou au serveur d'application (4).

8. Procédé selon l'une des revendications précédentes, **caractérisé en ce que** les mesures suivantes sont prises en fonction du solde de points de crédit (N) du nœud radio (10) :
- le serveur de réseau et/ou le serveur d'application (3) n'envoient pas de transmission en liaison descendante (DL) au nœud radio (10) ; et/ou
- le nœud radio (10) ne traite pas une transmission en liaison descendante (DL) reçue ; et/ou
- le nœud radio (10) n'envoie pas de réponse à une transmission en liaison descendante (DL) reçue ; et/ou
- le nœud radio (10) n'envoie pas une transmission en liaison montante (UL) actuellement à envoyer.

9. Procédé selon la revendication 8, **caractérisé en ce qu'**au moins l'une des mesures est prise lorsqu'une première valeur limite (G1) est atteinte, en prévoyant en particulier que le nœud radio (10) envoie une notification au serveur de réseau 3 et/ou au serveur d'application 7 lorsque la première valeur limite (G1) est atteinte.

10. Procédé selon la revendication 8 ou 9, **caractérisé en ce qu'**au moins l'une des mesures est prise lorsqu'une deuxième valeur limite (G2) est atteinte, un solde de points de crédit (N) plus faible étant associé à la deuxième valeur limite (G2) en comparaison de la première valeur limite (G1).

11. Procédé selon l'une des revendications précédentes, **caractérisé en ce que** l'au moins une fenêtre de réception (RX1, RX2) est ouverte dans un intervalle de temps (V_RX1, V_RX2) déterminé après la fin de la transmission en liaison montante (UL).

12. Procédé selon l'une des revendications précédentes, **caractérisé en ce qu'**une première fenêtre de réception (RX1) et une deuxième fenêtre de réception (RX2) sont prévues et la deuxième fenêtre de réception (RX2) est ouverte lorsqu'aucun télégramme de données ou instruction ou respectivement une partie de ceux-ci ne sont reçus dans la première fenêtre de réception (RX1), en prévoyant en particulier que la deuxième fenêtre de réception (RX2) soit ouverte espacée dans le temps par rapport à la première fenêtre de réception (RX1).

13. Procédé selon l'une des revendications précédentes, **caractérisé en ce que** des fenêtres de réception (RXB) supplémentaires sont prévues, lesquelles sont ouvertes périodiquement à des intervalles de temps (V_RXB) prédéterminés.

14. Procédé selon l'une des revendications précédentes, **caractérisé en ce que** le nœud radio (10) passe d'un mode veille à un mode d'émission pour une transmission en liaison montante (UL) et/ou d'un mode veille à un mode de réception pour une réception en liaison descendante.

15. Procédé selon l'une des revendications précédentes, **caractérisé en ce que** le nœud radio (10) passe dans un mode veille après la transmission en liaison montante (UL) et/ou après la fermeture d'une fenêtre de réception (RX1, RX2, RXB).

16. Nœud radio (10) comprenant
une antenne (11),
une unité de commande (13),
une batterie (15) ainsi que
un dispositif détecteur et/ou un dispositif actionneur,
**caractérisé en ce que**
le nœud radio (10) est préparé pour mettre en œuvre le procédé selon l'une des revendications précédentes.
